**Europäisches Patentamt**

**European Patent Office**

**Office européen des brevets**

(19)

(11) Numéro de publication: **0 159 216**
**A1**

(12)

# DEMANDE DE BREVET EUROPEEN

(21) Numéro de dépôt: **85400394.4**

(22) Date de dépôt: **01.03.85**

(51) Int. Cl.⁴: **A 01 K 7/02**

(30) Priorité: **02.03.84 FR 8403272**

(43) Date de publication de la demande:
**23.10.85 Bulletin 85/43**

(84) Etats contractants désignés:
**DE FR GB IT NL**

(71) Demandeur: **Joulot, Philippe**
**3, Avenue de la Loire**
**F-41500 Muides(FR)**

(72) Inventeur: **Joulot, Philippe**
**3, Avenue de la Loire**
**F-41500 Muides(FR)**

(74) Mandataire: **de Boisse, Louis et al,**
**37, Avenue Franklin D. Roosevelt**
**F-75008 Paris(FR)**

(54) **Auge à fixation perfectionnée adaptable à divers supports.**

(57) Un auge (1) présente une partie postérieure verticale (4) à facettes multiples juxtaposées (5, 8, 10) aménagées en vue de leur fixation, au choix, sur des supports de géométries variées et subdivisées en :

    a) deux pans latéraux (5-5) aménagés pour fixation à un dièdre tel qu'une encoignure (E),

    b) un pan central (8) aménagé pour fixation à une surface plane telle qu'un mur ou paroi (P),

    c) une échancrure axiale en V (10) pour fixation à un montant cylindrique ou tubulaire (T)

    Application comme abreuvoir à chevaux

FIG.:1

1

## Auge à fixation perfectionée adaptable à divers supports

La présente invention a pour objet un abreuvoir, mangeoire
ou analogue, conçu et agencé pour en permettre la fixation,
à la discrétion de l'opérateur, sur des supports de géométries variées, élargissant de la sorte les facultés de
montage à pied d'oeuvre de l'auge, ce qui autorise une
standardisation poussée et une réduction notable de modèles
en stock.

L'auge conforme à la présente invention comporte à cet
effet une partie postérieure verticale à facettes multiples justaposées aménagées en vue de leur fixation, au
choix, à un pan de mur ou bien une encoignure ou bien encore un montant cylindrique.

La description qui va suivre en regard des dessins annexés, donnée à titre d'exemple non limitatif, fera bien
comprendre comment l'invention peut être réalisée.

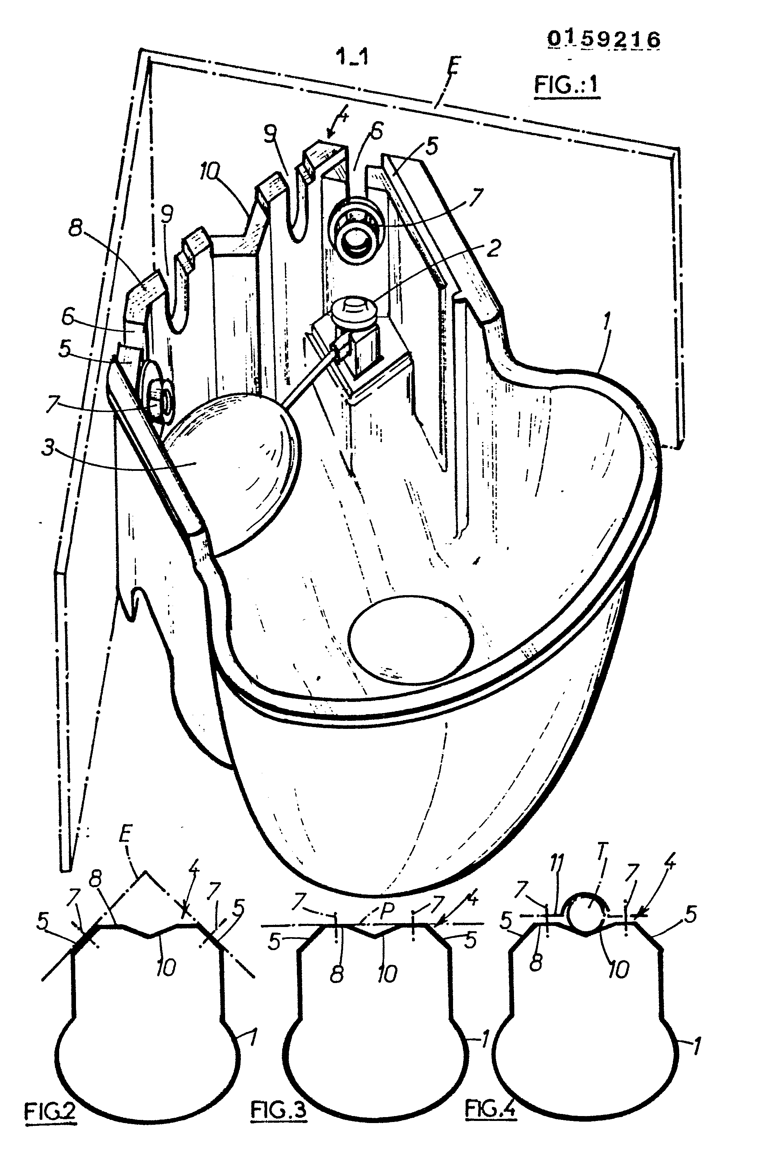

La Figure 1 est une vue en perspective d'un abreuvoir
perfectionné selon la présente invention.

Les Figures 2, 3 et 4 sont des schémas illustrant trois
modes différents de fixation de cet abreuvoir.

L'abreuvoir dont un mode de réalisation est représenté
sur les dessins peut avantageusement avoir un corps galbé
1 réalisé en aluminium de qualité alimentaire et comporter
une robinetterie 2 à flotteur 3.

2 0159216

Conformément à la présente invention, cet abreuvoir présente, venue de fonderie, une partie postérieure verticale 4 qui se subdivise en trois agencements de fixation à répartition symétrique par rapport à l'axe vertical de cette partie postérieure 4, à savoir :

- deux pans latéraux inclinés 5-5 formant entre eux un angle droit et dans lesquels sont pratiquées des fentes 6-6 pour fixation, à l'aide de boulons 7-7, dans une encoignure E en dièdre rectangle;

- un pan central 8 dans lequel sont pratiquées des fentes 9-9 pour fixation, de la même façon, à une paroi plane P;

- une échancrure axiale 10 en V pour fixation à un tuyau vertical T, par exemple un tuyau d'amenée d'eau, toujours au moyen de boulons tels que 7-7 coopérant ici avec une contre-bride 11 prenant appui de l'autre côté du tuyau T.

Il va de soi que le mode de réalisation décrit n'est qu'un exemple et qu'on pourrait le modifier, notamment par substitution d'équivalents techniques, sans sortir pour cela du cadre de l'invention.

REVENDICATIONS

1°    Auge caractérisée en ce qu'elle présente une partie postérieure verticale (4) à facettes multiples juxtaposées (5, 8, 10) aménagées en vue de leur fixation, au choix, sur des supports de géométries variées, notamment un pan de mur (P), une encoignure (E), un montant cylindrique (T).

2°    Auge selon la revendication 1, caractérisée en ce qu'elle comporte en juxtaposition :
a) deux pans latéraux (5-5) aménagés pour fixation à un dièdre tel qu'une encoignure (E),
b) un pan central (8) aménagé pour fixation à une surface plane telle qu'un mur ou paroi (P),
c) une échancrure axiale en V (10) pour fixation à un montant cylindrique ou tubulaire (T), par exemple un tuyau d'amenée d'eau.

3°    Auge selon la revendication 2, caractérisée en ce que le pan central (8) et les deux pans latéraux (5-5) s'étendent symétriquement par rapport à l'échancrure axiale (10).

4°    Application de l'auge selon la revendication 1, 2 ou 3 comme abreuvoir pour chevaux.

0159216

1_1

FIG.:1

FIG.2        FIG.3        FIG.4

0159216

Office européen
des brevets

RAPPORT DE RECHERCHE EUROPEENNE

Numéro de la demande

EP  85 40 0394

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 443 803 (SUEVA HAIGES) <br> * Figures 3,5,6; page 4, lignes 10-14, 22-35 * | 1 | A 01 K   7/02 |
| A |  | 2-4 |  |

DOMAINES TECHNIQUES
RECHERCHES (Int. Cl.4)

A 01 K

Le present rapport de recherche a été établi pour toutes les revendications

| Lieu de la recherche | Date d'achèvement de la recherche | Examinateur |
|---|---|---|
| LA HAYE | 05-06-1985 | VILBIG K |